# EUROPEAN PATENT SPECIFICATION

(11) **EP 1 517 246 B1**
(45) Date of publication and mention of the grant of the patent: **15.11.2006**
(21) Application number: 03021326.8
(22) Date of filing: 19.09.2003
(51) Int. Cl.: G06F 13/38, G06F 13/40, G06F 3/06

(54) **A method for transferring data and a data transfer interface**
Ein Verfahren zum Datentransfer und eine Datentransferschnittstelle
Une méthode de transfert de données et une interface de transmission de données

(43) Date of publication of application: 23.03.2005
(73) Proprietor: Harman Becker Automotive Systems GmbH, 76307 Karlsbad (DE)
(72) Inventor: Vollmer, Hans, 78052 VS-Villingen (DE)
(74) Representative: Grünecker, Kinkeldey, Stockmair & Schwanhäusser Anwaltssozietät

(56) References cited:
- US-A- 5 446 877
- US-A- 5 898 891
- US-B1- 6 301 625

## Description

The present invention relates to a method for transferring data between two data storage drives. In particular, the present invention relates to a data transfer interface and a method for transferring data from a first data storage drive to a second data storage drive.

Data interfaces allow a host device, like a computer system, to send and receive information for data storage devices such as hard disk drives or optical data storage media. For connecting such peripheral devices to the host, the ATA (AT-Attachment) bus of the original IBM/AT PC is still widely in use. The ATA bus standard has been extended with the AT Attachment Packet Interface (ATAPI) and is since then named ATA/ATAPI. The ATA/ATAPI is an interface extension that supports connection of external devices to computer systems, in particular, to personal computers.

The ATA/ATAPI standard defines a task set of registers used by the peripheral devices and host computer to effect the transfer of data. Peripheral devices require device-specific control information such as a sector, a cylinder number or a head ID to search for position information of a read/write head. This information is individually transferred and written into a register of the peripheral device.

A communication session with a peripheral device using ATA/ATAPI proceeds through several phases. The host computer writes a command to a command register on the ATA/ATAPI peripheral during a command phase. Thereafter, a data phase is entered in which the data is transferred from/to the peripheral device.

US-A-5 898 891 describes a direct data transfer between two storage devices, for instances, hard disk drives. For this purpose, an EIDE controller is connected to a primary and a secondary IDE channel for connecting storage devices. Data to be read from to be written to the storage devices are buffered in a read buffer or a write buffer. In order to accelerate a data transfer from one storage device to another, the data stored in the read buffer can be directly routed to the write buffer.

When copying data between two peripheral devices connected to a host, the data is first read from one of the peripheral devices, transferred to the host and, finally, transferred and written to the second peripheral device. Such a processing is time consuming, in particular when copying large amounts of data.

In view of this drawback, the present invention aims to reduce the time needed therefore and to provide a method for transferring data between data storage drives and to provide a data transfer interface.

This is achieved by the features of the independent claims.

It is the particular approach of the present invention that conventionally successively performed read and write operations of a data transfer can be carried out concurrently. In this manner, the time required for copying data between two data storage drives is considerably reduced. Due to the concurrently performed operations, interruptions of a continuous data read process of the first storage drive by write cydes writing data to the second data storage drive can be avoided. By providing a memory, the data read from the first data storage drive can be buffered. While the previously read data is written to the second data storage drive, the subsequent data block is already read at the same time and stored in the memory.

Preferably, the time needed for writing a block of data is shorter than the time required for reading a data block. Consequently, data can be read from the first data storage drive in a continuous manner and a maximum time saving can be achieved.

According to a preferred embodiment, the first data storage drive is an optical disk drive and said second data storage drive is a hard disk drive. Such a disk drive combination enables an efficient transfer of data, in particular ROM data, having a long data access time to a re-writable storage medium with short data access times. The accelerated copy procedure facilitates the use of optical storage media for providing large amounts of data as update information which can be transferred to a hard disk drive for easy access by a data processing system.

Preferably, the reading and storing operation is accomplished by a look-ahead functionality provided within the first data storage drive. The look-ahead functionality can be implemented by employing any of a plurality of commercially available disk drives providing the required memory and functionality.

Preferably, said data blocks represent video, audio, navigation and other data which usually require a huge storage capacity. The use of such data and the distribution on optical storage media is facilitated by employing the present invention. A data copying process for integrating the data on a first data storage medium into a data processing process can be accomplished in an easy manner in accordance with the present invention.

Further preferred embodiments of the present invention are the subject matter of dependent claims

Additional features and advantages of the present invention will become apparent from the following description of the invention as illustrated in the drawings, wherein:
- Fig. 1: schematically illustrates a "single channel" data connection of two data storage drives to a host device;
- Fig. 2: schematically illustrates an individual connection of two data storage drives to a host device;
- Fig. 3: is flow chart illustrating a conventional method for transferring data from a first to a second data storage medium;
- Fig. 4: is timing diagram illustrating the conventional copying process;
- Fig. 5: is timing diagram illustrating the data copying process in accordance with the present invention; and
- Fig. 6: is a flow chart illustrating the data copying process in accordance with the present invention.

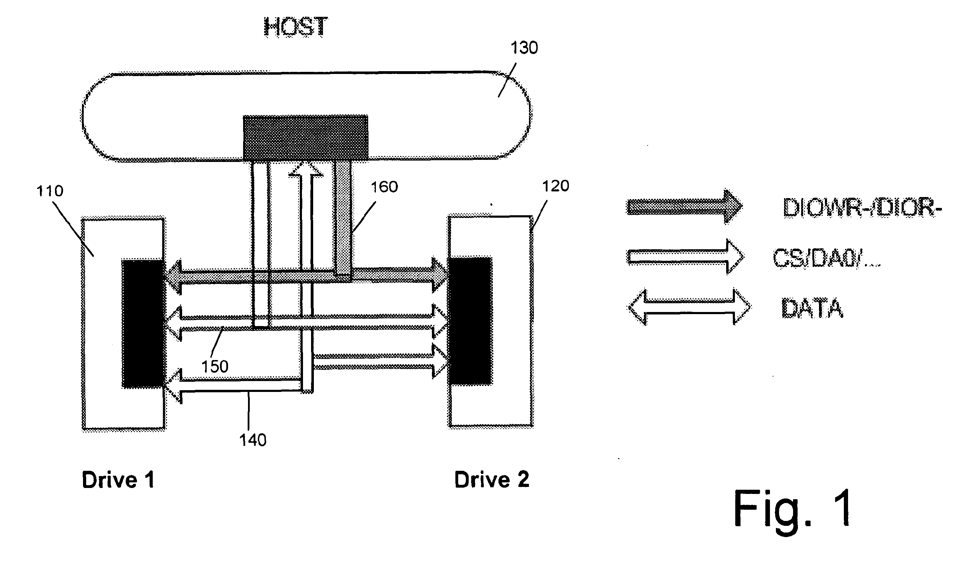

Referring to Fig. 1, a single data transfer interface is illustrated connecting to two data storage drives 110, 120. Both data storage drives 110 and 120 share a single connector provided at the host or control device 130. A plurality of data liens 140, a plurality of control lines 150 and read/write lines 160 jointly connect the two data storage drives 110, 120 to the host 130. When selecting a particular identifier bit in a drive/register provided in each of the data storage drives 110, 120, one of the data storage drives 110, 120 is selected for carrying out a read or write operation.

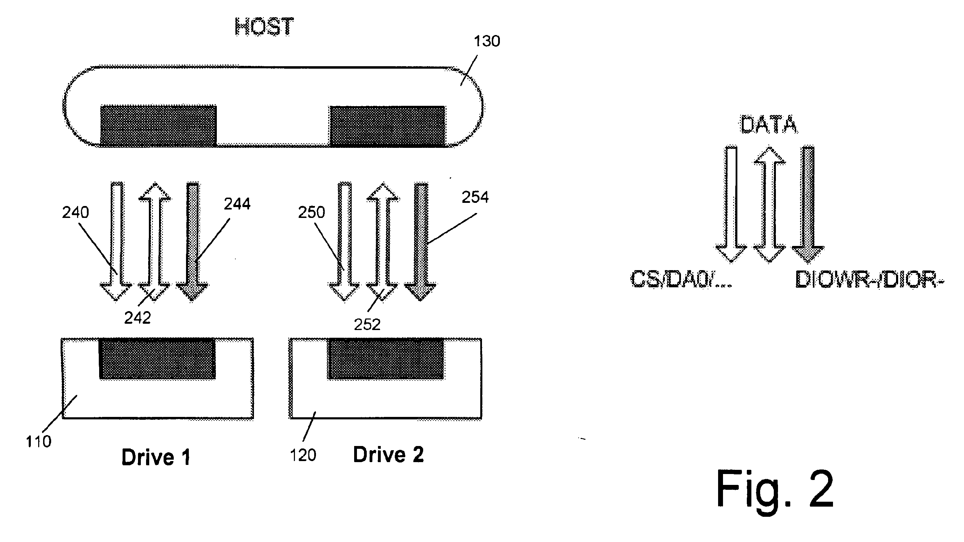

An alternative implementation for connecting the two data storage drives 110, 120 to a single host 130 is illustrated in Fig. 2. Both data storage drives 110, 120 are connected to host 130 by individual data lines 240, 250, individual data control lines 242, 252 and individual read/write command lines 244, 254.

While the data interface configuration of Fig. 1 only allows a single of the data storage drives 110, 120 to exchange data with the host 130 at a time, the configuration shown in Fig. 2 allows simultaneous communication of both data storage drives 110, 120 with the host 130.

The data storage drives can be all kinds of storage media like optical disk drives, hard disk drives, floppy disk drives, flash memories and silicon drives. The types of peripheral devices connected to the data transfer interface is not limited to the explicitly mentioned data storage means.

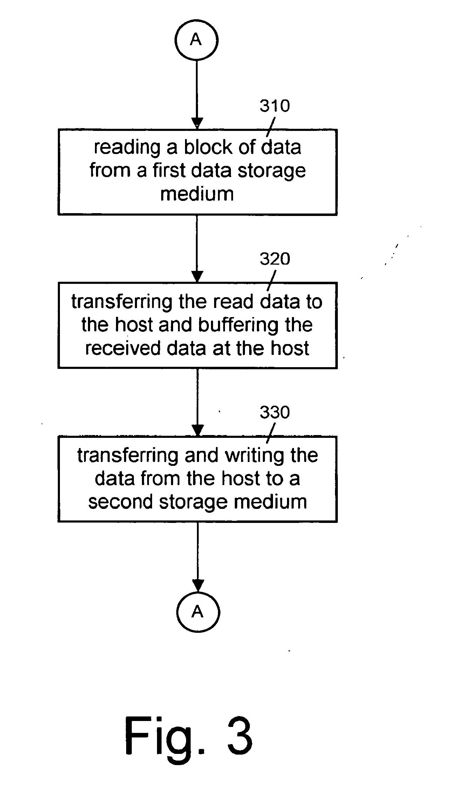

Referring to Fig. 3, the conventional process of copying data between two data storage drives is illustrated. First, a block of data is read from a first data storage medium (steps 310). The read data block is transferred to the host and buffered therein (step 320). When the data obtaining stage (steps 310, 320) is completed, the data write stage is started in step 330. The buffered data is transferred to the second data storage drive and written therein on a data storage media.

The data is stored on both storage media in form of a plurality of data blocks which are individually copied between both drives. Thus, steps 310, 320 and 330 are performed in a repetitive manner in order to transfer all desired data. Thus, the process returns to step 310 after the execution of step 330 in order to start with the next block.

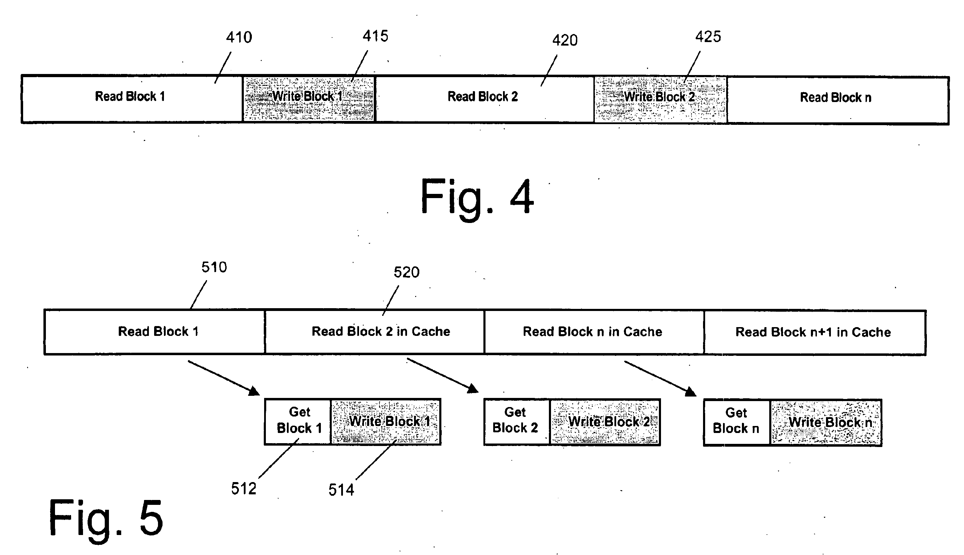

The sequence of the processing steps required for data copying with respect to time is shown in Fig. 4. After reading a first data block during time period 410, the obtained data is written to the second storage medium during time period 415. In a corresponding manner, the data of block 2 is read during time period 420 and written to a time period 425.

The time period required for transferring a single data block from a first data storage drive to a second data storage drive corresponds to the accumulated of the read time period 410 and the write time period 415.

In contrast thereto, Fig. 5 illustrates the timing diagram of a copy process in accordance with the present invention. The read and write operations which are conventionally performed subsequently are now performed in parallel. After the data of a first block 510 have been obtained, the data is transferred to the second data storage drive during a time period 512 and written thereon during a time period 514. When the reading 510 of the data of the first block has been completed, the reading continues with the reading 512 of the data of the second block. The read and write procedures for each individual block are offset such that each block is written only after the data read procedure for the respective block has been completed.

The parallel read and write operations are accomplished by employing a cache memory for buffering read data. The cache memory is located in the first data storage drive. Although a data transmission between the host and the connected drive is only possible to one of the data storage drives at a time, the read and write processes can be carried out concurrently. The read data are buffered within the first data storage drive 110, while the control unit or host 130 transfers the data from the cache memory of the first data storage drive to the second data storage drive which is instructed to write the received data on its storage medium.

By providing a cache memory within the first data storage drive 110, the drive can continuously read data to be stored therein. This can be achieved by employing a look-ahead functionality. This function already reads the next block of data and thus, enables an acceleration of the required read time 510.

A particular optimization of the data exchange can be achieved when a data storage drive having a slow data access time is used as a first data storage drive, for instance a DVD drive, and a target drive having a short access time is used as the second data storage drive, for instance a hard disk drive. As the time needed for writing an obtained data block to the hard disk drive is considerably shorter than the time need to read the respective data block, a continuous reading of data blocks is achieved and the time required for copying large amounts of data between both drives is considerably reduced.

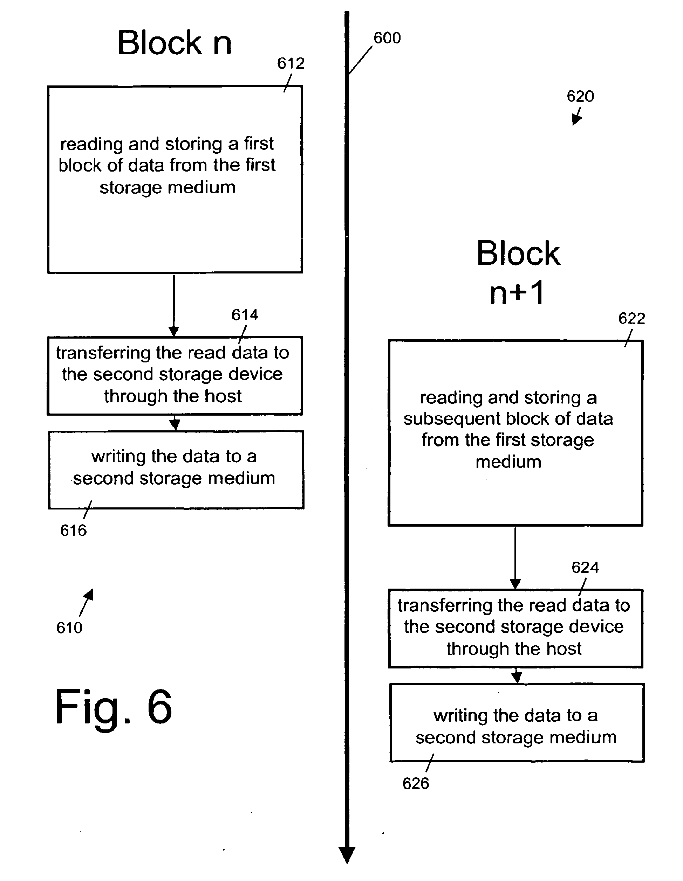

Referring to Fig. 6, the individual steps carried out during a data copying process in accordance with the present invention is illustrated. The processing blocks of Fig. 6 are arranged with respect to a time axis 600 in order to reflect the sequential and parallel relationships of the processing stages for subsequent data blocks.

First, a block n is read from the first data storage drive and stored therein (step 612). After the reading and storing of block n is completed, a data transfer is requested by the control device and the stored data block is transferred accordingly to the host (step 614). The host then transmits the obtained data block to the target drive (step 614) while the first data storage drive already reads and stores data of a subsequent block *n*+*1* (step 622).

The data transmitted to the second data storage drive is written on the storage medium included therein (step 616).

Depending on the respective transfer speeds of the data storage drives, the reading and storing of data of block *n*+*1* may already completed before all data of the previous block n have been written to the second data storage drive. In such circumstances, small interruptions occur in the data reading process.

After the writing of data has been completed, the subsequent block *n*+*1* (which has already been read from the first data storage drive) is requested from the control device 130 and transferred thereto from the cache memory (steps 614, 624).

Summarising, the present invention accelerates a data transfer between two data storage drives by performing read and write operations in parallel. This is accomplished by buffering read data in a cache memory provided within the first data storage drive (source drive) while the data previously read are transferred and written to the second data storage drive (target drive).

## Claims

1. A method for transferring data between two data storage drives (110, 120) by repetitively transferring blocks of data (510,520) from a first data storage drive (110) to a second data storage drive (120), comprising the steps of:
reading (622) the data of a data block (520) from the first data storage drive (110),
storing the block of read data (520) in a memory, and
writing (616) the data of a previously read block of data (510) from said memory to the second data storage drive (120) when reading (622) said block of data (520),
**characterised in that**
said step of storing a read block of data (520) stores the data in a cache memory provided in said first data storage drive (110).

2. A method according to claim 1, wherein the time required for writing a block of data (514, 524, 534) onto said second data storage drive (120) being shorter than the time required for reading a block of data (510, 520) from said first data storage drive (110).

3. A method according to claim 1 or 2, wherein the data transfer speed of said first data storage drive (110) being slower than that of said second data storage drive (120).

4. A method according to any of claims 1 to 3, wherein said first data storage drive (110) being an optical disk drive and said second data storage drive (120) being a hard disk drive.

5. A method according to claim 1, wherein said cache memory being continuously filled with read data.

6. A method according to any of claims 1 to 4, wherein said step (622) of reading and storing data being accomplished by a look-ahead functionality provided by said first data storage drive (110).

7. A method according to any of claims 1 to 6, wherein said data storage drives (110, 120) being connected to a control device (130).

8. A method according to any of claims 1 to 7, wherein said read block of data (510, 520) being transferred through a control device (130).

9. A method according to claim 8, wherein said blocks of data (510, 520) representing video, audio, navigation or other data.

10. A computer program comprising code means adapted to perform all steps of claim 1.

11. A computer program product comprising a computer readable medium having computer readable program code embodied thereon, said program code being adapted to carry out all steps of claim 1.

12. A data transfer interface including a control unit (130) for connecting two data storage drives (110, 120) to said control unit (130) for transferring data from a first data storage drive (110) to a second data storage drive (120) in form of data blocks,
**characterised in that**
said first data storage drive (110) including a memory for storing blocks of data (510, 520) read from said first data storage drive (110), and
said control unit (130) being adapted to control the data transfer process such that a reading and storing of a block of data (520) in said memory of said first data storage drive (110) and a transfer and writing of a previously read block of data (510) in said second data storage drive (120) being performed concurrently.

13. A data transfer interface according to claim 12, wherein the data transfer speed of said first data storage drive (110) being slower than that of said second data storage drive (120).

14. A data transfer interface according to any of claim 12 or 13, wherein said first data storage drive (110) being an optical disk drive and said second data storage drive (120) being a hard disk drive.

15. A data transfer interface according to any of claims 12 to 14, wherein said control unit (130) instructing said first data storage drive (110) to read a block of data (510, 520) and to transfer the read block of data (510, 520) to said control unit (130), and said control unit (130) forwarding the received block of data (510, 520) to said second data storage drive (120).

16. A vehicle information and/or entertainment system comprising a data transfer interface in accordance with any of claims 12 to 15.

17. A vehicle information and/or entertainment system according to claim 16, wherein said blocks of data (510, 520) representing video, audio, navigation or other data.

## Patentansprüche

1. Verfahren zur Übertragung von Daten zwischen zwei Datenspeicherlaufwerken (110, 120) durch wiederholtes Übertragen von Datenblöcken (510, 520) von einem ersten Datenspeicherlaufwerk (110) zu einem zweiten Datenspeicherlaufwerk (120), umfassend die Schritte:
Lesen (622) der Daten eines Datenblock (520) von dem ersten Datenspeicherlaufwerk (110),
Speichen des Blocks der gelesenen Daten (520) in einem Speicher und
Schreiben (616) der Daten eines zuvor aus dem Speicher gelesenen Datenblocks (510) in das zweiten Datenspeicherlaufwerk (120), wenn der Datenblock (520) gelesen wird,
**dadurch gekennzeichnet, dass**
der Schritt des Speicherns eines gelesenen Datenblocks (520) die Daten in einem Pufferspeicher speichert, der durch das erste Datenspeicherlaufwerk (110) bereitgestellt wird.

2. Verfahren nach Anspruch 1, wobei die Zeit, die für das Schreiben eines Datenblocks (514, 524, 534) zu dem zweiten Datenspeicherlaufwerk (120) benötigt wird, kürzer ist als die Zeit, die für das Lesen eines Datenblocks (510, 520) von dem ersten Datenspeicherlaufwerk (110) benötigt wird.

3. Verfahren nach Anspruch 1 oder 2, wobei die Datenübertragungsgeschwindigkeit des ersten Datenspeicherlaufwerks (110) geringer ist, als die des zweiten Datenspeicherlaufwerks (120).

4. Verfahren nach einem der Ansprüche 1 bis 3, wobei das erste Datenspeicherlaufwerk (110) ein optisches Laufwerk ist und das zweite Datenspeicherlaufwerk (120) eine Festplatte ist.

5. Verfahren nach Anspruch 1, wobei der Pufferspeicher kontinuierlich mit gelesenen Daten gefüllt wird.

6. Verfahren nach einem der Ansprüche 1 bis 4, wobei der Schritt (622) des Lesens und Speicherns von Daten durch eine look-ahead-Funktionalität ausgeführt wird, die durch das erste Datenspeicherlaufwerk (110) bereitgestellt wird.

7. Verfahren nach einem der Ansprüche 1 bis 6, wobei die Datenspeicherlaufwerke (110, 120) durch eine Steuervorrichtung (130) verbunden sind.

8. Verfahren nach einem der Ansprüche 1 bis 7, wobei der gelesene Datenblock (510, 520) durch eine Steuervorrichtung (130) übertragen wird.

9. Verfahren nach Anspruch 8, wobei die Datenblöcke (510, 520) Video-, Audio-, Navigations- oder andere Daten darstellen.

10. Computerprogramm, das eine Codevorrichtung umfasst, die dazu ausgeführt ist, alle Schritte nach Anspruch 1 durchzuführen.

11. Computerprogrammprodukt, dass ein computerlesbares Medium umfasst, auf dem computerlesbarer Programmcode enthalten ist, wobei der Programmcode so angepasst ist, um alle Schritte nach Anspruch 1 auszuführen.

12. Datenübertragungsschnittstelle, die eine Steuereinheit (130) enthält, zur Verbindungen von zwei Datenspeicherlaufwerken (110, 120) an die Steuereinheit (130) zur Übertragung von Daten in Form von Datenblöcken von einem ersten Datenspeicherlaufwerk (110) an ein zweites Datenspeicherlaufwerk (120),
**dadurch gekennzeichnet, dass**
das erste Datenspeicherlaufwerk (110) einen Speicher zur Speicherung von Datenblöcken (510, 520), die von dem ersten Datenspeicherlaufwerk (110) gelesen werden, enthält und
die Steuereinheit (130) dazu angepasst ist, den Datenübertragungsprozesses so zu steuern, dass ein Lesen und Speichern eines Datenblocks (520) in dem Speicher des ersten Datenspeicherlaufwerk (110) und eine Übertragung und ein Schreiben eines zuvor gelesenen Datenblocks (510) in das zweiten Oatenspeicherlaufwerk (120) gleichzeitig ausgeführt werden.

13. Datenübertragungsschnittstelle nach Anspruch 12, wobei die Datenübertragungsgeschwindigkeit des ersten Datenspeicherlaufwerks (110) geringer ist, als die des zweiten Datenspeicherlaufwerks (120).

14. Datenübertragungsschnittstelle nach einem der Ansprüche 12 oder 13, wobei das erste Datenspeicherlaufwerk (110) ein optisches Laufwerk und das zweite Datenspeicherlaufwerk (120) eine Festplatte ist.

15. Datenübertragungsschnittstelle nach einem der Ansprüche 12 bis 14, wobei die Steuereinheit (130) das erste Datenspeicherlaufwerk (110) anweist einen Datenblock (510, 520) zu lesen und den gelesenen Block (510, 520) an die Steuereinheit (130) zu übertragen, und die Steuereinheit (130) den empfangenen Datenblock (510, 520) an das zweite Datenspeicherlaufwerk (120) weiterleitet.

16. Fahrzeuginformations- und/oder Unterhaltungssystem, das eine Datenübertragungsschnittstelle gemäß einem der Ansprüche 12 bis 15 umfasst.

17. Fahrzeuginformations- und/oder Unterhaltungssystem nach Anspruch 16, wobei der Datenblock (510, 520) Video-, Audio-, Navigations- oder andere Daten darstellt.

## Revendications

1. Procédé pour transférer des données entre deux lecteurs de stockage de données (110, 120) par transfert répétitif de blocs de données (510, 520) d'un premier lecteur de stockage de données (110) vers un deuxième lecteur de stockage de données (120), comprenant les étapes de :
lecture (622) des données d'un bloc de données (520) du premier lecteur de stockage de données (110),
stockage du bloc de données (520) lues dans une mémoire, et
écriture (616) des données d'un précédent bloc de données lues (510) de ladite mémoire sur le second lecteur de stockage de données (120) pendant la lecture (622) dudit bloc de données (520),
**caractérisée en ce que**
ladite étape de stockage d'un bloc de données lu (520) stocke les données dans une mémoire cache fournie dans ledit premier lecteur de stockage de données (110).

2. Procédé selon la revendication 1, dans lequel le temps requis pour écrire un bloc de données (514, 524, 534) sur ledit second lecteur de stockage de données (120) est plus court que le temps requis pour lire un bloc de données (510, 520) dudit premier lecteur de stockage de données (110).

3. Procédé selon la revendication 1 ou 2, dans lequel la vitesse de transfert de données dudit premier lecteur de stockage de données (110) est plus lente que celle dudit second lecteur de stockage de données (120).

4. Procédé selon l'une quelconque des revendications 1 à 3, dans lequel ledit premier lecteur de stockage de données (110) est un lecteur de disque optique et ledit second lecteur de stockage de données (120) est un lecteur de disque dur.

5. Procédé selon la revendication 1, dans lequel ladite mémoire cache est remplie en continu des données lues.

6. Procédé selon l'une quelconque des revendications 1 à 4, dans lequel ladite étape (622) de lecture et stockage des données est exécutée par un registre d'anticipation fourni par ledit premier lecteur de stockage de données (110).

7. Procédé selon l'une quelconque des revendications 1 à 6, dans lequel lesdits lecteurs de stockage de données (110, 120) sont connectés à un dispositif de commande (130).

8. Procédé selon l'une quelconque des revendications 1 à 7, dans lequel ledit bloc de données lu (510, 520) est transféré par l'intermédiaire d'un dispositif de commande (130).

9. Procédé selon la revendication 8, dans lequel lesdits blocs de données (510, 520) représentent des données vidéo, audio, de navigation ou d'autres données.

10. Programme d'ordinateur comprenant des moyens de code adaptés pour exécuter toutes les étapes de la revendication 1.

11. Programme d'ordinateur comportant un support lisible par ordinateur incorporant le code d'un programme lisible par ordinateur, ledit code de programme étant adapté pour effectuer toutes les étapes de la revendication 1.

12. Une interface de transfert de données incluant une unité de commande (130) pour connecter deux lecteurs de stockage de données (110, 120) à ladite unité de commande (130) pour transférer des données d'un premier lecteur de stockage de données (110), vers un second lecteur de stockage de données (120) sous la forme de blocs de données,
**caractérisée en ce que**
ledit premier lecteur de stockage de données (110) inclut une mémoire pour le stockage de blocs de données (510, 520) lus par ledit premier lecteur de stockage de données (110), et
ladite unité de commande (130), est adaptée pour commander le procédé de transfert de données de sorte qu'une lecture et un stockage d'un bloc de données (520) dans ladite mémoire dudit premier lecteur de stockage de données (110) et un transfert et une écriture dans ledit deuxième lecteur de stockage de données d'un bloc de données lues précédemment (510) soient exécutés simultanément.

13. Interface de transfert de données selon la revendication 12, dans laquelle la vitesse de transfert des données dudit premier lecteur de stockage de données (110) est plus lente que celle dudit deuxième lecteur de stockage de données (120).

14. Interface de transfert de données selon l'une quelconque des revendications 12 ou 13, dans laquelle ledit premier lecteur de stockage de données (110) est un lecteur de disque optique et ledit deuxième lecteur de stockage de données est un lecteur de disque dur.

15. Interface de transfert de données selon l'une quelconque des revendications 12 à 14, dans laquelle ladite unité de commande (130) donne instruction audit premier lecteur de stockage de données (110) de lire un bloc de données (510, 520) et de transférer le bloc de données (510, 520) lu vers ladite unité de commande (130), et ladite unité de commande (130) transmet le bloc des données (510, 520) reçues audit second lecteur de stockage de données (120).

16. Système d'information et/ou de loisir pour véhicule comprenant une interface de transfert de données conformément à l'une quelconque des revendications 12 à 15.

17. Système d'information et/ou de loisir pour véhicule selon la revendication 16, dans lequel lesdits blocs de données (510, 520) représentent des données vidéo, audio, de navigation ou d'autres données.
